# EUROPÄISCHE PATENTANMELDUNG

(11) **EP 3 695 764 A1**
(43) Veröffentlichungstag der Anmeldung: **19.08.2020**
(21) Anmeldenummer: 19157887.1
(22) Anmeldetag: 18.02.2019
(51) Int. Cl.: A47J 47/12, A47J 47/00

(54) **MULTIFUNKTIONALER BEHÄLTER**

(71) Anmelder: Riegelhof, Dieter, 8610 Uster (CH)
(72) Erfinder: Riegelhof, Dieter, 8610 Uster (CH)
(74) Vertreter: Herrmann, Johanna

(57) **Zusammenfassung**

Ein Behälter (1) umfasst ein Bodenelement (5), ein Deckenelement (6), eine vordere Wand (7), eine Rückwand (8), und ein erstes und zweites Seitenwandelement (3, 4). Das Bodenelement (5), das Deckenelement (6), die vordere Wand (7), die Rückwand (8) durch eine flexible Unterlage (2) gebildet werden, wobei das erste und zweite Seitenwandelement (3, 4) von der flexiblen Unterlage (2) abnehmbar sind.

## Beschreibung

### Hintergrund

Die vorliegende Erfindung betrifft einen multifunktionalen Behälter, insbesondere einen Behälter zur Aufbewahrung von Brot oder anderen Backwaren. Erfindungsgemäss kann somit ein Brotkasten, ein Schneidbrett und eine Ablage für weiche Möbelstücke, beispielsweise ein Sofa oder Bett, in einem Produkt kombiniert werden. Der Grundgedanke dabei ist, dass das Aufbewahren, Schneiden und Verzehren von Backwaren in einem direkten Zusammenhang steht und eine multifunktionale Lösung daher einen Mehrwert für den Anwender bringt.

### Stand der Technik

Aus dem Dokument WO2010108021 A2 ist ein multifunktionales Schneidbrett bekannt, welches mit einer faltbaren Haube ausgestattet ist, die über das Schneidbett ausgebreitet werden kann, um auf dem Schneidbrett gelagerte Lebensmittel, beispielsweise Brot, vor Umgebungseinflüssen zu schützen.

Die Herstellung einer faltbaren Haube ist allerdings mit einigem Aufwand verbunden. Wenn die Haube aus Kunststoffen und Textilmaterialien hergestellt ist, ist sie zudem nicht sehr stabil.

Daher besteht Bedarf an einem konstruktiv einfachen und universell verwendbaren multifunktionalen Behälter.

Aus der EP 0650 686 A1 ist ein Brotkasten bekannt, welcher einen Boden, zwei Seitenwände und eine Rückwand aufweist, die mit einer Klappe verschliessbar sind. Die Klappe ist als Schneidbrett ausgebildet und um eine waagrechte, in der Ebene des Bodens liegende Achse schwenkbar. Dieser Brotkasten weist zwar im Vergleich mit der vorgenannten faltbaren Haube erhöhte Stabilität auf, allerdings ist der Brotkasten selbst eine Einheit, deren Funktion festgelegt ist und somit nicht verändert werden kann.

Daher besteht Bedarf, einen stabilen Behälter bereitzustellen, der als Unterlage oder als Schneidbrett verwendet werden kann.

### Aufgabe der Erfindung

Es ist Aufgabe der Erfindung, einen multifunktionalen Behälter zu entwickeln, der nicht nur als Behälter, sondern auch als Unterlage verwendet werden kann, wobei die Behälterwand eine erhöhte Stabilität aufweist und zumindest eine der Behälterwände als Schneidbrett ausgebildet ist, wenn sie auf die Unterlage gelegt wird.

Aufgabe der Erfindung ist es, einen multifunktionalen Behälter zu entwickeln, der vom Anwender einfach in eine Unterlage für die Backwaren umgewandelt werden kann. Die Unterlage kann zumindest teilweise als Schneidbrett verwendet werden.

### Beschreibung der Erfindung

Die Lösung der Aufgabe der Erfindung erfolgt durch einen multifunktionalen Behälter gemäss Anspruch 1. Vorteilhafte Ausführungsbeispiele des multifunktionalen Behälters sind Gegenstand der Ansprüche 2 bis 10.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für den erfindungsgemässen multifunktionalen Behälter. Die Beschreibung eines bestimmten Behälters ist nur als beispielhaft anzusehen. In der Beschreibung und den Ansprüchen werden die Begriffe "enthalten", "umfassen", "aufweisen" als "enthalten, aber nicht beschränkt auf" interpretiert.

Im Folgenden bedeutet der Begriff Ausnehmung eine Öffnung von beliebigem Querschnitt.

Ein erfindungsgemässer Behälter umfasst ein Bodenelement, ein Deckenelement, eine vordere Wand, eine Rückwand, und ein erstes und zweites Seitenwandelement. Das Bodenelement, das Deckenelement, die vordere Wand und die Rückwand werden durch eine flexible Unterlage gebildet, wobei das erste und zweite Seitenwandelement von der flexiblen Unterlage abnehmbar sind.

Die flexible Unterlage kann zumindest zwei Zustände einnehmen, einen ersten Zustand, in welchem die flexible Unterlage eine im Wesentlichen ebene Oberfläche ausbildet und einen zweiten Zustand, in welchem die flexible Unterlage die Seitenwandelemente zumindest teilweise umhüllt. Der Behälter wird erhalten, indem die flexible Unterlage mit den ersten und zweiten Seitenwandelementen entlang der Kanten der ersten und zweiten Seitenwandelemente verbunden wird.

Gemäss einem Ausführungsbeispiel sind zumindest eines der ersten und zweiten Seitenwandelemente auf die Unterlage ablegbar, wodurch eine Schneidfläche ausgebildet wird. Jedes der ersten oder zweiten Seitenwandelemente kann als Schneidbrett verwendet werden. Jedes der Schneidbretter kann auf der flexiblen Unterlage abgelegt werden oder an einem beliebigen anderen Ort verwendet werden, da die flexible Unterlage und die Seitenwandelemente voneinander vollständig trennbar sind.

Die flexible Unterlage kann nach einem Ausführungsbeispiel als Matte ausgebildet sein.

Nach einem Ausführungsbeispiel kann die flexible Unterlage eine Mehrzahl von Leisten enthalten. Die Leisten können als Stabelemente ausgebildet sein. Die Stabelemente können eine Querschnittsfläche aufweisen, die Querschnittsfläche kann ein Vieleck mit runden oder geraden Kanten sein. Gemäss einem Ausführungsbeispiel kann die Querschnittsfläche rechteckig, rund, insbesondere oval, sein.

Die Verbindung der Unterlage mit den ersten und zweiten Seitenwandelementen kann beispielsweise über ein oder mehrere Magnetelemente sowie ein zugehöriges magnetisierbares Element oder zugehörige magnetisierbare Elemente erfolgen. Das Magnetelement oder die Magnetelemente oder das magnetisierbare Element können auf oder in der flexiblen Unterlage angeordnet sein. Die das oder die Magnetelemente halten die flexible Unterlage auf der Kante des entsprechenden ersten oder zweiten Seitenwandelements, wenn die flexible Unterlage um das entsprechende erste oder zweite Seitenwandelement gewickelt wird.

Alternativ können das oder die Magnetelemente sich in der Kante des Seitenwandelements befinden. Auf der flexiblen Unterlage befindet sich an zwei gegenüberliegenden Seiten in der Nähe der Kante magnetisierbares Element, beispielsweise ein Metallstreifen, der sich von der Vorderseite zur Rückseite der flexiblen Unterlage erstreckt.

Das Magnetelement kann beispielsweise als ein Zylinder oder Vierkant oder ein Stift ausgebildet sein. Das Magnetelement kann in einer zugehörigen Ausnehmung in der Leiste oder im Seitenwandelement angeordnet sein. Das Magnetelement kann formschlüssig oder durch eine Klebeverbindung in der zugehörigen Ausnehmung gehalten werden. Das Magnetelement kann freiliegend angeordnet sein oder sich im Inneren der Leiste befinden, oder vom Verbindungselement verdeckt werden.

Gemäss einem Ausführungsbeispiel kann die flexible Unterlage eine erste und zweite Nut aufweisen, die sich an zwei gegenüberliegenden Seiten in der Nähe der Kante der Unterlage erstreckt. In diese Nut können entsprechende Stiftelemente eingreifen, welche an der umlaufenden Kante des Wandelements angebracht sind.

Ein Vorteil des erfindungsgemässen Behälters ist darin zu sehen, dass er aus sehr wenigen Bauteilen besteht, nämlich einer flexiblen Unterlage und zwei Seitenwandelementen. Die Unterlage kann nach einem Ausführungsbeispiel eine bestimmte Anzahl Leisten, beispielsweise Vierkantleisten, aufweisen, die dann doppelte Anzahl an Magneten aufweist, die an deren Enden angeordnet sind. Die Vierkantleisten können beispielsweise mit einem Stück Stoff verbunden sein, sodass die Vierkantleisten die Unterlage ausbilden. Das erste und zweite Seitenwandelement kann durch je ein Stahlblech gebildet werden. Insbesondere kann das Stahlblech eine im Wesentlichen ovale Form aufweisen. Die Wandstärke des ersten und zweiten Seitenwandelements kann nach einem Ausführungsbeispiel im Bereich von 1,5 bis 2 mm liegen.

Durch die gewählte Bauweise lassen sich Behälter in beliebiger Länge und mit beliebigem Volumen herstellen, um den unterschiedlichen Bedarf der Single-, Familien- und Grossfamilien-Haushalte zu bedienen.

Die Unterlage sowie die Seitenwandelemente unterliegen keinem nennenswerten Verschleiss.

Der Behälter ist multifunktional, da er im ausgerollten Zustand wahlweise als Tablett oder als grosszügiges Schneidbrett fungieren kann. Aufgrund der Flexibilität der Unterlage kann sie im ausgerollten Zustand auch auf weichen oder unebenen Möbelstücken verwendet werden, wie beispielsweise einem Sofa oder Bett.

Die flexible Unterlage kann aus unterschiedlichen Materialien, beispielsweise Kunststoffen, Holz oder Verbundstoffen bestehen. Die fast unbeschränkten Auswahlmöglichkeiten an Materialien ermöglichen eine individuelle Gestaltung der Oberfläche der flexiblen Unterlage oder deren Farbe. Zudem können die Materialien einer Beschichtung, Lackierung oder anderen Oberflächenbehandlung unterzogen werden, sodass die Möglichkeiten für ein formschönes Design sehr vielfältig sind.

Die flexible Unterlage kann luftdurchlässig sein. Hierdurch können optimale klimatische Bedingungen innerhalb des Behälters erzeugt werden.

Insbesondere können die flexible Unterlage sowie die Seitenwandelemente Naturstoffe enthalten, beispielsweise Hölzer, Textilien oder aus Naturstoffen bestehen.

Es wird nicht nach Boden, vordere Klappe und Rückwand unterschieden, alle drei Bestandteile des Behälters sind in einer Form mit den gleichen Materialien gestaltet. Letzteres optimiert die klimatischen Verhältnisse im Inneren des Behälters nachhaltig.

Durch das Einklappen der Seitenwandelemente nach innen entsteht eine Schneidefläche für das Schneiden von Backwaren. Diese kann durch Dopplung der Seitenwandelemente noch vergrössert bzw. verschönert werden (Herzform).

Der Behälter ist vorteilhafterweise derart ausgebildet, dass er keine scharfkantigen Bauteile aufweist. Die Unterlage kann lediglich durch die darin eingelassenen Magnetelemente auf dem entsprechenden Seitenwandelement gehalten werden. Die Magnetelemente besitzen nur einen geringen Kraftschluss, sodass Verletzungen (Klemmungen) ausgeschlossen sind.

Mittels des Hinzufügen zweier länglicher Stahlblechstreifen (in entsprechender Stärke) kann eine weitere Funktion für die Konstruktion erzielt werden. Der Kraftschluss der Festmagnete mit den länglichen Stahlblechstreifen erzeugt ein Tablett, welches geeignet ist, Gegenstände, beispielsweise Teller, Tassen, zu transportieren.

### Kurzbeschreibung der Zeichnungen

Nachfolgend wird ein erfindungsgemässer multifunktionaler Behälter anhand einiger Ausführungsbeispiele dargestellt. Es zeigen
Fig. 1 einen multifunktionalen Behälter nach einem ersten Ausführungsbeispiel im geschlossenen Zustand,
Fig. 2 den multifunktionalen Behälter nach dem ersten Ausführungsbeispiel im halb offenen Zustand,
Fig. 3 eine aus dem multifunktionalen Behälter gemäss Fig. 1 oder Fig. 2 erhältliche Unterlage und Seitenwandelemente,
Fig. 4 die Unterlage der Fig. 3 und die als Schneidbretter verwendeten Seitenwandelemente,
Fig. 5 einen multifunktionalen Behälter gemäss einem zweiten Ausführungsbeispiel,
Fig. 6 den multifunktionalen Behälter gemäss Fig. 5 und die als Schneidflächen verwendeten Seitenwandelemente,
Fig. 7 ein Detail eines Endabschnitts einer Leiste für eine flexible Unterlage nach einem ersten Ausführungsbeispiel,
Fig. 8 ein Detail eines Endabschnitts einer Leiste für eine flexible Unterlage nach einem zweiten Ausführungsbeispiel,
Fig. 9 ein Detail eines Endabschnitts einer Leiste für eine flexible Unterlage nach einem dritten Ausführungsbeispiel,
Fig. 10 ein Detail eines Endabschnitts einer Leiste für eine flexible Unterlage nach einem vierten Ausführungsbeispiel,
Fig. 11 einen multifunktionalen Behälter gemäss einem dritten Ausführungsbeispiel in teilweise geöffnetem Zustand,
Fig. 12 einen multifunktionalen Behälter gemäss einem vierten Ausführungsbeispiel in teilweise geöffnetem Zustand,
Fig. 13 ein Detail eines Endabschnitts einer flexiblen Unterlage nach einem fünften Ausführungsbeispiel,
Fig. 14 ein Detail eines Endabschnitts einer flexiblen Unterlage nach einem sechsten Ausführungsbeispiel.

### Detaillierte Beschreibung der Zeichnungen

In einigen Figuren sind einige Elemente gestrichelt mit Strich-Punkt-Linien gezeichnet. Es handelt sich dabei um Optionen oder Stellungen, welche alternativ oder zusätzlich zum durchgezogen gezeichneten Ausführungsbeispiel möglich sind. Strichlierte Linien können Elemente zeigen, die von anderen Elementen verdeckt sind, also unsichtbar sind. Für gleiche oder gleichwirkende Elemente werden - wenn möglich - dieselben Bezugszeichen in den verschiedenen Figuren verwendet.

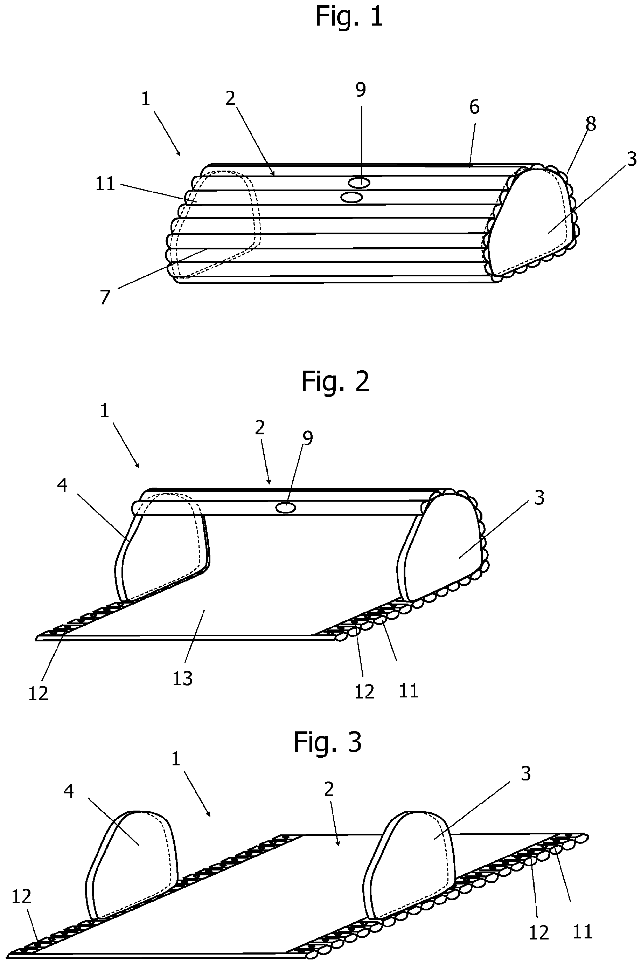

Fig. 1 zeigt einen schematischen Aufbau eines beispielhaften Behälters 1, der ein erstes Seitenwandelement 3 und ein zweites Seitenwandelement 4, ein Bodenelement 5, ein Deckenelement 6, eine vordere Wand 7 sowie eine Rückwand 8 aufweist. Das Bodenelement 5, das Deckenelement 6, die vordere Wand 7 sowie die Rückwand 8 werden von einer flexiblen Unterlage 2 gebildet. Auf der flexiblen Unterlage 2 kann ein Griffelement 9 angebracht sein, um die flexible Unterlage 2 vom ersten und zweiten Seitenwandelement 3, 4 abzunehmen, was in Fig. 2 dargestellt ist.

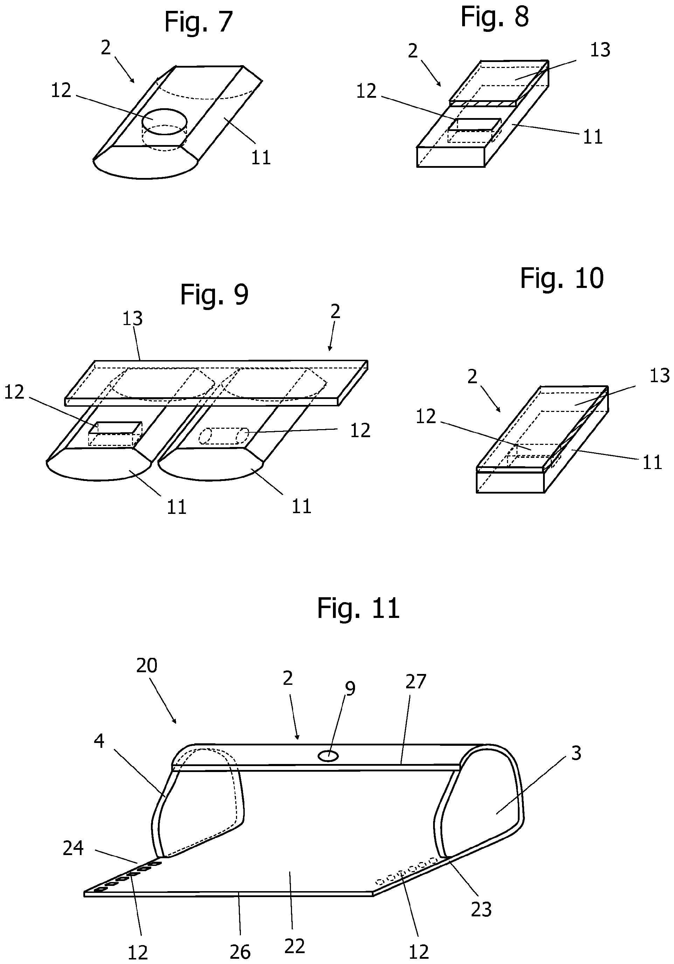

Fig. 2 zeigt den Behälter 1 in halboffenem Zustand. Die flexible Unterlage 2 ist teilweise von den ersten und zweiten Seitenwandelementen 3, 4 abgenommen. Die flexible Unterlage 2 umfasst gemäss diesem Ausführungsbeispiel eine Mehrzahl von Leisten 11, die als Stabelemente ausgebildet sind. Ein Detail eines Endabschnitts einer Leiste 11 ist in Fig. 7 dargestellt. Die Leiste 11 enthält zwei Magnetelemente 12, die an deren Enden angebracht sind. Die Leisten sind miteinander durch ein Verbindungselement 13 verbunden. Gemäss dem vorliegenden Ausführungsbeispiel überdeckt das Verbindungselement 13 die Endbereiche der Leisten 11 nicht. Das heisst, die Leisten 11 überragen das Verbindungselement 13, sodass die Magnetelemente 12 freiliegend sind.

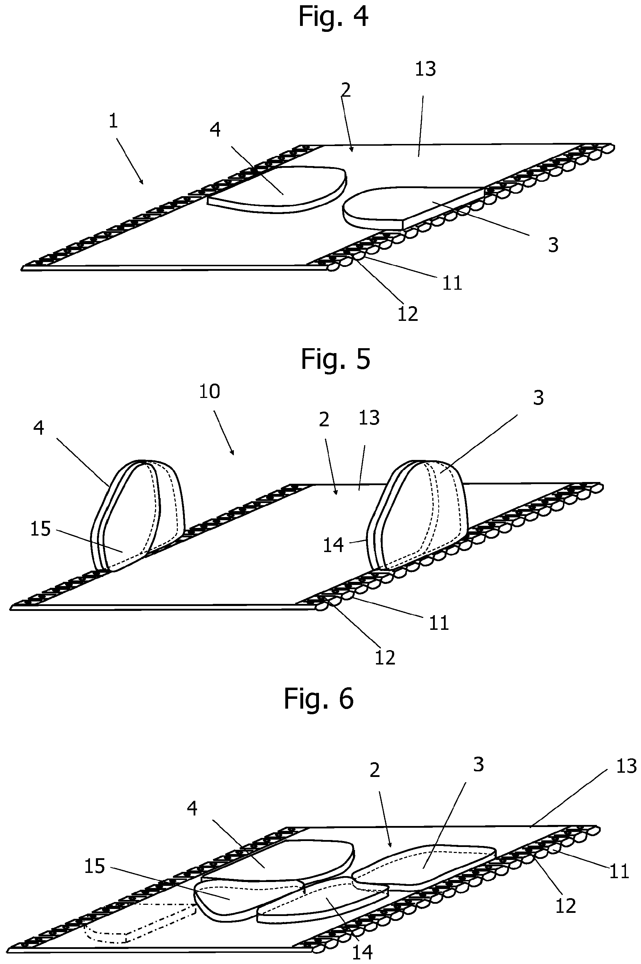

Fig. 3 zeigt die flexible Unterlage 2 sowie die beiden Seitenwandelemente 3, 4 im offenen Zustand des Behälters 1. Das erste und zweite Seitenwandelement ist in Fig. 3 in stehender Position gezeigt, in Fig. 4 liegen das erste und zweite Seitenwandelement 3, 4 auf der flexiblen Unterlage 2 auf. Das erste und zweite Seitenwandelement 3, 4 können ein magnetisierbares Element enthalten oder aus einem magnetisierbaren Material bestehen. Beispielsweise können die ersten und zweiten Seitenwandelemente 3, 4 ein Stahlblech enthalten oder aus einem Stahlblech bestehen. Wenn ein Seitenwandelement 3, 4 über die Magnetelemente 12 der flexiblen Unterlage 2 zu liegen kommt, kann das Seitenwandelement in dieser Position gehalten werden, was in Fig. 4 für das erste Seitenwandelement 3 exemplarisch dargestellt ist. Die beiden Seitenwandelemente 3, 4 können sich an einem beliebigen Ort auf der flexiblen Unterlage 2 befinden. Sie können auch von der flexiblen Unterlage 2 abgenommen werden, wenn sie nicht zur Versteifung derselben oder als Schneidfläche benötigt werden.

Gemäss dem vorliegenden Ausführungsbeispiel besteht der Behälter 1 nur aus wenigen Bauteilen, einem ersten und zweiten Seitenwandelement 3, 4 und einer flexiblen Unterlage 2. Für die flexible Unterlage 2 wird gemäss dem vorliegenden Ausführungsbeispiel eine bestimmte Anzahl Leisten 11 benötigt, beispielsweise Vierkantleisten oder Viertelstäbe. Die Leisten 11 sind von der Höhe und Breite geeignet, um am jeweiligen Ende eine einseitige - nicht durchgängige - Bohrung aufzunehmen. Selbige bildet die Aufnahme für ein Magnetelement 12, beispielsweise ein zylinderförmiges Magnetelement (siehe Fig. 7) oder ein quaderförmiges Magnetelement (siehe Fig. 8). Das Magnetelement 12 wird mit der Leiste 11 verbunden, indem es in die Leiste 11 eingelassen oder eingepresst oder verklebt wird. Die gewählte Länge der Leisten 11 bestimmt die spätere Länge des Behälters 1. Die Anzahl der Leisten 11 ergibt den Umfang, Breite bzw. das Volumen des Behälters 1. Die Leisten 11 werden mit einem Verbindungselement 13 verbunden. Wenn beispielsweise die Leisten auf eine horizontale Unterlage ablegt werden, kann das Verbindungselement 13 auf den nebeneinander liegenden Leisten befestigt werden, beispielsweise kann das Verbindungselement 13 auf die Leiste geklebt werden. Das Verbindungselement 13 ist aus einem biegeschlaffen Material gebildet, beispielsweise einer Folie oder einem Stoff. Die Leisten werden vorzugsweise parallel zueinander nebeneinander aufgelegt und das Verbindungselement 13 darauf ausgebreitet. Ein Klebemittel kann auf die dem Verbindungselement 13 zugewendete Oberfläche der Leiste 11 aufgetragen werden. Die Verbindungselemente 13 werden somit vorzugsweise derart auf einem Untergrund angeordnet, dass nach der Verbindung mit dem Verbindungselement 13 eine rechteckige flexible Unterlage 2 ausgebildet wird. Insbesondere kann eine rechteckige Matte erzeugt werden. Diese flexible Unterlage 2 kann bereits als Auflagefläche oder als Schneidbrett auf der mit dem Verbindungselement 13 versehenen Seite dienen. Die gegenüberliegende Seite der flexiblen Unterlage 2 bildet die Auflage auf einem beliebigen Untergrund aus, beispielsweise zur Ablage der flexiblen Unterlage 2 auf weichen Möbelstücken.

Damit die flexible Unterlage 2 als Behälter 1 verwendet werden kann, sind das erste und zweite Seitenwandelement 3, 4 vorgesehen. Das erste und zweite Seitenwandelement 3, 4 kann nach einem Ausführungsbeispiel ein ovales, tropfenförmig gestanztes oder geschnittenes Stück Stahlblech sein. Mittels des ersten und zweiten Seitenwandelements 3, 4 können die Magnetelemente 12 der flexiblen Unterlage 2 entlang deren Kante verbunden werden. Bei exakt passendem Umfang entsteht nun der Behälter, selbiger ist in dieser Konfiguration allseitig geschlossen. Bedingt durch die gewählte Konstruktion weist der Behälter 1 in geschlossener Form ein Bodenelement 5, eine vordere Wand 7, ein Deckenelement 7 sowie eine Rückwand 8 auf. Eine der vorderen Wände 7 oder der Rückwände 8 kann eine Klappe aufweisen, welche durch die beiden freien Endkanten der flexiblen Unterlage 2 gebildet wird. Die Klappe kann mittels einem Griffelement 9 geöffnet werden. Das Griffelement 9 kann in der Nähe einer der beiden freien Endkanten angeordnet sein.

Die flexible Unterlage bildet durch das umfangsseitige Umschliessen der Seitenwandelemente 3, 4 erst ein Bodenelement 5, eine vordere Wand 7, ein Deckenelement 6 sowie eine Rückwand 8 aus. Eine feste Zuordnung dieser vier Bestandteile gibt es bei der erfindungsgemässen Bauform nicht.

Wenn das Verbindungselement 13 einen textilen Werkstoff, beispielsweise einen Stoff enthält, können mittels der Dichte des gewählten textilen Werkstoffes die klimatischen Bedingungen im geschlossenen Behälter optimal gewählt werden und somit kann sichergestellt werden, dass die Frische der im Behälter gelagerten Güter erhalten bleibt oder eine höchstmögliche Haltbarkeit verderblicher Güter erreicht wird. Insbesondere eignet sich der Behälter gemäss einem der Ausführungsbeispiele als Brotkasten zur Aufnahme von Backwaren.

Fig. 5 zeigt einen multifunktionalen Behälter 10 gemäss einem zweiten Ausführungsbeispiel in geöffnetem Zustand. Im geschlossenen Zustand entspricht der Behälter 10 dem in Fig. 1 dargestellten Ausführungsbeispiel. Wie im ersten Ausführungsbeispiel weist der Behälter 10 eine flexible Unterlage 2 und erste und zweite Seitenwandelemente 3, 4 auf, die in ihrem Aufbau den entsprechenden Bauteilen des ersten Ausführungsbeispiels entsprechen. Zusätzlich sind für den Behälter 10 ein erstes und zweites Innenwandelement 14, 15 vorgesehen. Die Innenwandelemente 14, 15 können zur Erhöhung der Stabilität der ersten und zweiten Seitenwandelemente 3, 4 beitragen. Die ersten und zweiten Innenwandelemente 14, 15 können wie die ersten und zweiten Seitenwandelemente 3, 4 ein magnetisierbares Element enthalten oder ein magnetisierbares Material oder aus magnetisierbarem Material bestehen, beispielsweise einem Stahlblech.

Die ersten oder zweiten Seitenwandelemente 3,4 oder die ersten oder zweiten Innenwandelemente 14, 15 können auch als Verbundelemente ausgebildet sein. Beispielsweise kann jedes der ersten oder zweiten Seitenwandelemente 3, 4 oder jedes der ersten oder zweiten Innenwandelemente 14, 15 eine Holzschicht oder Kunststoffschicht umfassen, die als Schneidfläche verwendbar ist, und eine Schicht aus magnetisierbarem Material umfassen.

Fig. 6 zeigt den multifunktionalen Behälter 10 gemäss dem zweiten Ausführungsbeispiel, gemäss welchem die ersten und zweiten Seitenwandelemente 3,4 und die ersten und zweiten Innenwandelemente 14, 15 auf der flexiblen Unterlage 2 ausgelegt sind. Jedes der ausgelegten Seitenwandelemente oder Innenwandelemente kann als Schneidfläche verwendet werden. Insbesondere kann die Innenseite jedes der Seitenwandelemente 3, 4 als Schneidfläche verwendet werden, die Aussenseite liegt auf der flexiblen Unterlage 2 auf. Hierdurch befinden sich allfällige Gebrauchsspuren auf der Innenseite der ersten und zweiten Seitenwandelemente 3, 4 sodass die Aussenseite des Behälter 1, 10 nicht durch Gebrauchsspuren verunstaltet werden kann und unansehnlich wird.

Die ersten und zweiten Innenwandelemente 14, 15 können eine beliebige Kontur aufweisen. Die Schneidfläche der ersten und zweiten Innenwandelemente 14, 15 entspricht maximal der Oberfläche der ersten und zweiten Seitenwandelemente 3, 4.

Beispielsweise können die ersten und zweiten Innenwandelemente 14, 15 derart auf der flexiblen Unterlagen 2 angeordnet werden, dass sie eine Herzform ausbilden.

Fig. 7 zeigt ein Detail eines Endabschnitts einer Leiste 11 nach einem ersten Ausführungsbeispiel. Die Leiste 11 enthält ein Magnetelement 12, welches in einer Ausnehmung der Leiste 11 aufgenommen ist. Das Magnetelement 12 ist gemäss diesem Ausführungsbeispiel zylinderförmig. Anstelle eines zylinderförmigen Magnetelements 12 könnte auch ein quaderförmiges Magnetelement 12 verwendet werden, was in Fig. 8 dargestellt ist.

Fig. 8 zeigt ein Detail eines Endabschnitts einer Leiste 11 für eine flexible Unterlage 2 nach einem zweiten Ausführungsbeispiel. Die Leiste 11 ist als quaderförmige Leiste ausgebildet. Die Leiste 11 enthält ein Magnetelement 12, welches in einer Ausnehmung der Leiste 11 aufgenommen ist. Das Magnetelement 12 ist gemäss diesem Ausführungsbeispiel quaderförmig. Anstelle eines quaderförmigen Magnetelements 12 könnte auch ein zylinderförmiges Magnetelement 12 verwendet werden, wie in Fig. 7 dargestellt. In Fig. 8 ist auch ein Teil des Verbindungselements 13 gezeigt. Das Verbindungselement 13 überdeckt das Magnetelement 12 nicht, sodass das Magnetelement 12 direkt mit einem zugehörigen magnetisierbaren Element einer der ersten oder zweiten Seitenwandelemente 3, 4 in Kontakt sein kann.

Fig. 9 zeigt ein Detail eines Endabschnitts einer Leiste 11 nach einem dritten Ausführungsbeispiel. Gemäss diesem Ausführungsbeispiel sind zwei benachbarte Leisten 11 gezeigt, die mittels eines Verbindungselements 13 verbunden sind, von welchem ebenfalls nur ein Ausschnitt gezeigt ist. Die Leisten 11 und das Verdingungselement 13 sind am hinteren Ende abgeschnitten, daher zeigt auch Fig. 9 nur einen Teil einer flexiblen Unterlage 2. Jede der Leisten 11 enthält ein Magnetelement 12, welches in einer Ausnehmung der entsprechenden Leiste 11 aufgenommen ist. Das Verbindungselement 13 überdeckt das Magnetelement 12 nicht, sodass das Magnetelement 12 direkt mit einem zugehörigen magnetisierbaren Element einer der ersten oder zweiten Seitenwandelemente 3, 4 in Kontakt sein kann.

In Fig. 9 sind zwei verschiedene Varianten für das Magnetelement 12 gezeigt. Das Magnetelement 12 der linksseitig dargestellten Leiste 11 weist einen quaderförmigen Querschnitt auf. Die Oberfläche dieses Magnetelements 12 ist sichtbar, das heisst freiliegend. Das Magnetelement 12 der rechtsseitig dargestellten Leiste 11 weist einen zylinderförmigen Querschnitt auf. Dieses Magnetelement 12 ist in der Leiste 11 integriert, sodass es von aussen unsichtbar ist. Das Magnetelement 12 ist als Stabelement ausgebildet. Die Verwendung eines unsichtbaren Magnetelements 12 hat den Vorteil, dass das Magnetelement 12 sich auch nicht nach längerem Gebrauch des Behälters 1, 10 lösen kann und daher nicht verloren gehen kann.

Fig. 10 zeigt ein Detail eines Endabschnitts einer Leiste 11 für eine flexible Unterlage 2 nach einem vierten Ausführungsbeispiel. Die Leiste 11 ist als quaderförmige Leiste ausgebildet. Die Leiste 11 enthält ein Magnetelement 12, welches in einer Ausnehmung der Leiste 11 aufgenommen ist. Das Magnetelement 12 ist gemäss diesem Ausführungsbeispiel quaderförmig. Anstelle eines quaderförmigen Magnetelements 12 könnte auch ein zylinderförmiges Magnetelement 12, beispielsweise nach jedem der vorhergehenden Ausführungsbeispiele verwendet werden. In Fig. 8 ist auch ein Teil des Verbindungselements 13 gezeigt. Das Verbindungselement 13 überdeckt das Magnetelement 12, sodass das Magnetelement 12 nicht direkt mit einem zugehörigen magnetisierbaren Element einer der ersten oder zweiten Seitenwandelemente 3, 4 in Kontakt steht. Wenn es sich bei dem Verbindungselement 13 um eine Folie oder einen Stoff handelt, wird die Wirkung des Magnetfelds nicht oder nur unwesentlich beeinträchtigt. Die Verwendung eines abgedeckten Magnetelements 12 hat den Vorteil, dass das Magnetelement 12 sich auch nicht nach längerem Gebrauch des Behälters 1, 10 lösen kann und daher nicht verloren gehen kann.

Fig. 11 zeigt einen multifunktionalen Behälter 20 gemäss einem dritten Ausführungsbeispiel in teilweise geöffnetem Zustand. Im geschlossenen Zustand entspricht der Behälter 20 im Wesentlichen dem Behälter des in Fig. 1 dargestellten Ausführungsbeispiels. Wie im ersten Ausführungsbeispiel weist der Behälter 20 eine flexible Unterlage 2 und erste und zweite Seitenwandelemente 3, 4 auf, die in ihrem Aufbau den entsprechenden Bauteilen des ersten Ausführungsbeispiels entsprechen. Zusätzlich können für den Behälter 20 ein erstes und zweites Innenwandelement 14, 15 vorgesehen sein, wie in Fig. 5 oder Fig. 6 dargestellt ist, diese Kombination ist zeichnerisch allerdings nicht dargestellt. Die flexible Unterlage 2 ist als Matte 22 ausgebildet, beispielsweise aus einem Kunststoff, insbesondere einem ein Elastomer enthaltenden Kunststoff.

Die Matte 22 weist eine erste Seitenkante 23, eine zweite Seitenkante 24, eine Vorderkante 26 sowie eine Hinterkante 27 auf. Die Matte 22 kann auch mindestens ein Griffelement 9 aufweisen. Wenn ein zweites Griffelement 9 vorgesehen ist, ist es in der vorliegenden Darstellung nicht sichtbar.

In der Nähe der ersten Seitenkante 23 und der zweiten Seitenkante 24 befinden sich eine Mehrzahl von Magnetelementen. Die Magnetelemente 12 können nach jedem der in Fig. 7 bis Fig. 10 dargestellten Ausführungsbeispiele ausgebildet sein. Sie können, wie für die zweite Seitenkante 24 gezeigt, sichtbar sein, sodass ein direkter Kontakt des zweiten Seitenwandelements 4 mit den Magnetelementen 12 erfolgen kann. Die Magnetelemente 12 sind vorzugsweise in regelmässigen Abständen zueinander angeordnet, damit jedes der ersten oder zweiten Seitenwandelemente 3, 4 an einer beliebigen Position parallel zur entsprechenden ersten oder zweiten Seitenkante 23, 24 der Matte 22 angebracht werden können, wobei die Haltekraft an jeder beliebigen Position im Wesentlichen gleich gross ist.

Die Magnetelemente 12 können auch unsichtbar sein, das heisst, in die Matte 22 integriert sein, wie es für die erste Seitenkante 23 gezeigt ist.

Gemäss dem in Fig. 11 dargestellten Ausführungsbeispiel enthalten die ersten und zweiten Seitenwandelemente 3, 4 ein magnetisierbares Element oder ein magnetisierbares Material oder können aus magnetisierbarem Material bestehen, beispielsweise aus einem Stahlblech.

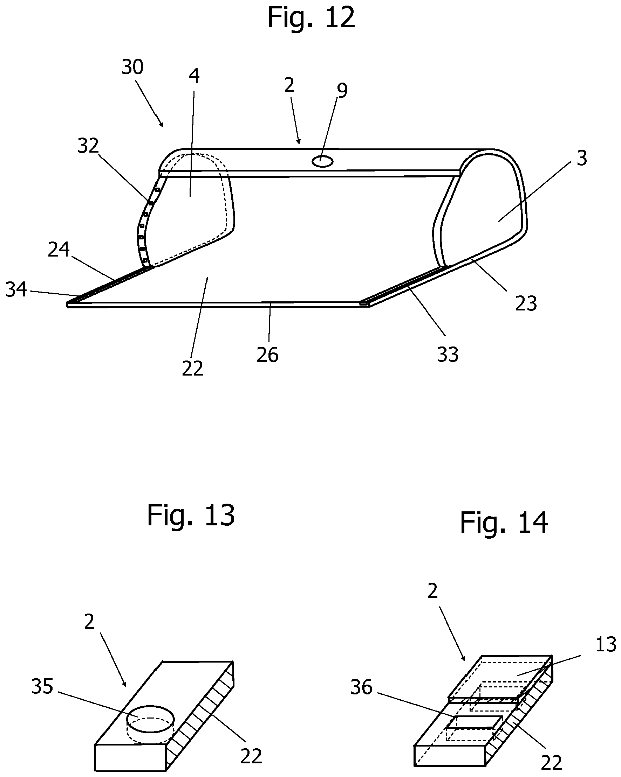

Fig. 12 zeigt einen multifunktionalen Behälter 30 gemäss einem vierten Ausführungsbeispiel in teilweise geöffnetem Zustand. Im geschlossenen Zustand entspricht der Behälter 30 im Wesentlichen dem in Fig. 1 dargestellten Ausführungsbeispiel. Wie im ersten Ausführungsbeispiel weist der Behälter 30 eine flexible Unterlage 2 und erste und zweite Seitenwandelemente 3, 4 auf, die in ihrem Aufbau den entsprechenden Bauteilen des ersten Ausführungsbeispiels entsprechen. Zusätzlich können für den Behälter 30 ein erstes und zweites Innenwandelement 14, 15 vorgesehen sein, wie in Fig. 5 oder Fig. 6 dargestellt ist, diese Kombination ist zeichnerisch allerdings nicht dargestellt. Die flexible Unterlage 2 ist als Matte 22 ausgebildet, beispielsweise aus Kunststoff, insbesondere einem ein Elastomer enthaltenden Kunststoff.

Die Matte 22 weist eine erste Seitenkante 23, eine zweite Seitenkante 24, eine Vorderkante 26 sowie eine Hinterkante 27 auf. Die Matte 22 kann auch mindestens ein Griffelement 9 aufweisen. Wenn ein zweites Griffelement 9 vorgesehen ist, ist es in der vorliegenden Darstellung nicht sichtbar.

In der Nähe der ersten Seitenkante 23 befindet sich ein erster Endabschnitt 33 und in der Nähe der zweiten Seitenkante 24 ein zweiter Endabschnitt 34, der ein magnetisierbares Element enthält oder ein magnetisierbares Material enthalten kann oder aus magnetisierbarem Material bestehen kann, beispielsweise aus einem Stahlblech.

Das erste Seitenwandelement 3 und das zweite Seitenwandelement 4 enthalten eine Mehrzahl von Magnetelementen 32. Die Magnetelemente 32 können nach jedem der in Fig. 7 bis Fig. 10 dargestellten Ausführungsbeispiele ausgebildet sein. Sie können, wie für das zweite Seitenwandelement 4 gezeigt, sichtbar sein, sodass ein direkter Kontakt des zweiten Endabschnitts 34 der flexiblen Unterlage 2 mit den Magnetelementen 32 erfolgen kann. Die Magnetelemente 32 sind vorzugsweise in regelmässigen Abständen zueinander angeordnet, damit jedes der ersten oder zweiten Seitenwandelemente 3, 4 an einer beliebigen Position auf der entsprechenden ersten oder zweiten Endabschnitte 33, 34 der Matte 22 angebracht werden kann, wobei die Haltekraft an jeder beliebigen Position im Wesentlichen gleich gross ist.

Die Magnetelemente 32 können auch unsichtbar sein, das heisst, in das entsprechende Seitenwandelement 3, 4 integriert sein, wie für das erste Seitenwandelement 3 gezeigt ist.

Fig. 13 zeigt ein Detail eines Endabschnitts einer flexiblen Unterlage 2 nach einem fünften Ausführungsbeispiel, wobei die flexible Unterlage 2 insbesondere für einen Behälter gemäss Fig. 11 oder Fig. 12 Verwendung finden kann.

Der Endabschnitt einer Matte 22 einer flexiblen Unterlage 2 enthält ein magnetisierbares Element 35, welches in einer Ausnehmung des Endabschnitts aufgenommen ist. Das magnetisierbare Element 35 ist gemäss diesem Ausführungsbeispiel zylinderförmig. Anstelle eines zylinderförmigen magnetisierbaren Elements 35 könnte auch ein quaderförmiges magnetisierbares Element 36 verwendet werden, wie in Fig. 14 dargestellt.

Fig. 14 zeigt ein Detail eines Endabschnitts einer flexiblen Unterlage 2 nach einem sechsten Ausführungsbeispiel, die insbesondere für einen Behälter gemäss Fig. 11 oder Fig. 12 Verwendung finden kann.

Der Endabschnitt einer Matte 22 einer flexiblen Unterlage 2 enthält ein magnetisierbares Element 36, welches in einer Ausnehmung des Endabschnitts aufgenommen ist. Das magnetisierbare Element 36 ist gemäss diesem Ausführungsbeispiel quaderförmig. Anstelle eines quaderförmigen magnetisierbaren Elements 35 könnte auch ein zylinderförmiges magnetisierbares Element 36 verwendet werden, wie in Fig. 13 dargestellt.

In Fig. 14 ist auch ein Teil eines Verbindungselements 13 gezeigt. Das Verbindungselement 13 überdeckt das magnetisierbare Element 36 nicht, sodass das magnetisierbare Element 36 direkt mit einem zugehörigen Magnetelement 32 einer der ersten oder zweiten Seitenwandelemente 3, 4 in Kontakt sein kann.

Gemäss einer nicht dargestellten Variante kann das magnetisierbare Element 36 sich von der Vorderkante 26 der Matte 22 bis zur Hinterkante 27 der Matte 22 erstrecken.

Ein derartiges magnetisierbares Element 36 kann auch nach der Art eines Kabelstrangs im Inneren der Matte 22 verlaufen.

Die Seitenwandelemente 3, 4 gemäss jedem der vorhergehenden Ausführungsbeispiele können als Verbundbauteile ausgebildet sein. Beispielsweise können die Seitenwandelemente ein Magnetelement oder ein magnetisierbares Element und ein Material aus der Gruppe der Kunststoffe, Metalle, Keramiken, Naturstoffe, insbesondere Hölzer, enthalten.

Für den Fachmann ist offensichtlich, dass viele weitere Varianten zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nichtausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C bis N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Behälter (1, 10, 20, 30) umfassend ein Bodenelement (5), ein Deckenelement (6), eine vordere Wand (7), eine Rückwand (8), und ein erstes und zweites Seitenwandelement (3, 4), **dadurch gekennzeichnet, dass** das Bodenelement (5), das Deckenelement (6), die vordere Wand (7), die Rückwand (8) durch eine flexible Unterlage (2) gebildet werden, wobei das erste und zweite Seitenwandelement (3, 4) von der flexiblen Unterlage (2) abnehmbar sind.

2. Der Behälter (1, 10, 20, 30) nach Anspruch 1, wobei zumindest eines der ersten und zweiten Seitenwandelemente (3, 4) auf die Unterlage (2) ablegbar sind, wodurch eine Schneidfläche ausgebildet wird.

3. Der Behälter (1, 10, 20, 30) nach einem der vorhergehenden Ansprüche, wobei die flexible Unterlage (2) eine Matte (22) oder eine Mehrzahl von Leisten (11) umfasst.

4. Der Behälter (1, 10) nach Anspruch 3, wobei die Leiste (11) als ein Stabelement ausgebildet ist.

5. Der Behälter (1, 10) nach einem der Ansprüche 3 oder 4, wobei die Leiste (11) eine Querschnittsfläche aufweist, die als ein Vieleck mit abgerundeten oder geraden Kanten oder mit abgerundeten oder geraden Seitenflächen ausgebildet ist.

6. Der Behälter (1, 10) nach einem der Ansprüche 3 oder 4, wobei die flexible Unterlage (2) eine Mehrzahl von Leisten (11) umfasst, die mittels eines Verbindungselements (13) miteinander verbunden sind.

7. Der Behälter (1, 10, 20, 30) nach einem der vorhergehenden Ansprüche, wobei die flexible Unterlage (2) ein Magnetelement (12) oder ein magnetisierbares Element (35, 36) umfasst.

8. Der Behälter (1, 10, 20, 30) nach einem der vorhergehenden Ansprüche, wobei das erste oder zweite Seitenwandelement (3, 4) ein magnetisierbares Element oder ein Magnetelement (32) enthält.

9. Der Behälter (1, 10, 20, 30) nach einem der vorhergehenden Ansprüche, wobei die flexible Unterlage (2) rechteckförmig ist.

10. Der Behälter (1, 10, 20, 30) nach einem der vorhergehenden Ansprüche, wobei die flexible Unterlage (2) ein Griffelement (9) enthält.
